# EUROPEAN PATENT APPLICATION

(11) **EP 3 654 335 A1**
(43) Date of publication of application: **20.05.2020**
(21) Application number: 18888119.7
(22) Date of filing: 22.11.2018
(51) Int. Cl.: G10L 25/90, H04L 12/18

(54) **METHOD AND APPARATUS FOR DISPLAYING PITCH INFORMATION IN LIVE BROADCAST ROOM, AND STORAGE MEDIUM**

(30) Priority: 14.12.2017 CN 201711340004
(71) Applicant: Guangzhou Kugou Computer Technology Co., Ltd., Guangzhou, Guangdong 510660 (CN)
(72) Inventor: LIANG, Yanpeng, Guangzhou, Guangdong 510660 (CN)
(74) Representative: Adamson Jones
(86) International application number: PCT/CN2018/116845
(87) International publication number: WO 2019/114514

(57) **Abstract**

The present disclosure provides a method and apparatus for displaying pitch information in a live webcast room, and a storage medium, pertaining to the field of computer technologies. The method includes: determining first human voice pitch information based on a human voice of a streamer captured by a streamer terminal in a live webcast room; acquiring information of a song, the song being at least one of a song played on the streamer terminal and a song sung by the streamer; acquiring standard pitch information of the song based on the information of the song; and displaying the first human voice pitch information and the standard pitch information on an audience terminal in the live webcast room. The present disclosure solves the problem that display of the pitch information is single in the related art. The present disclosure is applied to display the pitch information in the live webcast room.

## Description

This application claims priority to Chinese Patent Application No. 201711340004.4, filed on December 14, 2017 and entitled "METHOD AND APPARATUS FOR DISPLAYING PITCH INFORMATION IN LIVE WEBCAST ROOM, AND STORAGE MEDIUM", the entire contents of which are incorporated herein by reference.

### TECHNICAL FIELD

The present disclosure relates to the field of computer technologies, and in particular, relates to a method and apparatus for displaying pitch information in a live webcast room, and a storage medium.

### BACKGROUND

With rapid developments of live streaming over the Internet, more and more users watch live streaming content by means of live streaming over the Internet. Currently, the prevailing live streaming content includes gaming, singing, etc.
In the related art, when a streamer live streams his or her singing songs, pitch information is generally displayed on a streamer terminal (that is, a terminal used by the streamer for live streaming his or her performance), and thus the display of the pitch information is single.

### SUMMARY

Embodiments of the present disclosure provide a method and apparatus for displaying pitch information in a live webcast room, and a storage medium, capable of solving the problem that the display of the pitch information is single in the related art. The technical solutions are as follows.

In a first aspect, there is provided a method for displaying pitch information in a live webcast room, comprising:
determining first human voice pitch information based on a human voice of a streamer captured by a streamer terminal in a live webcast room;
acquiring information of a song, the song being at least one of a song played on the streamer terminal and a song sung by the streamer;
acquiring standard pitch information of the song based on the information of the song; and
displaying the first human voice pitch information and the standard pitch information on an audience terminal in the live webcast room.

Optionally, the determining first voice pitch information based on a voice of a streamer captured by a streamer terminal in a live webcast room comprises:
receiving a first packet from the streamer terminal, the first packet comprising human voice pitch data; and
determining the first human voice pitch information based on the human voice pitch data;
wherein the human voice pitch data is determined by the streamer terminal based on the human voice of the streamer.

Optionally, the human voice pitch data is discrete human voice data obtained by sampling second human voice pitch information after the streamer terminal determines the second human voice pitch information based on the human voice of the streamer; and the determining the first human voice pitch information based on the human voice pitch data comprises:
smoothening the human voice pitch data to obtain the first human voice pitch information.

Optionally, the first packet further comprises the information of the song; and the acquiring information of a song comprises:
acquiring the information of the song based on the first packet.

Optionally, the information of the song comprises identification information of the song; and the acquiring standard pitch information of the song based on the information of the song comprises:
acquiring a standard pitch file of the song based on the identification information of the song; and
acquiring the standard pitch information from the standard pitch file.

Optionally, the information of the song comprises a standard pitch file of the song; and the acquiring standard pitch information of the song based on the information of the song comprises:
acquiring the standard pitch information from the standard pitch file.

Optionally, the information of the song comprises a download address of a standard pitch file of the song; and the acquiring standard pitch information of the song based on the information of the song comprises:
downloading the standard pitch file of the song based on the download address; and
acquiring the standard pitch information from the standard pitch file.

Optionally, the receiving a first packet from the streamer terminal comprises:
displaying prompt information of pitch information on the audience terminal; and
receiving the first packet from the streamer terminal after a trigger operation for the prompt information of the pitch information is detected.

Optionally, the receiving a first packet from the streamer terminal comprises:
receiving the first packet and live streaming data that are synchronously sent by the streamer terminal, the live streaming data comprising multimedia data; and
the displaying the first human voice pitch information and the standard pitch information on an audience terminal in the live webcast room comprises:
   playing live streaming content that the live streaming data corresponds to on the audience terminal, and synchronously displaying the first human voice pitch information and the standard pitch information on the audience terminal.

Optionally, the multimedia data includes audio data of the song, and the acquiring the information of the song played on the streamer terminal, and/or the information of the song sung by the streamer comprises:
identifying the audio by the algorithm for listening to and identifying a song, to determine the information of the song.

Optionally, the first packet further comprises pitch score information; and the displaying the first human voice pitch information and the standard pitch information on an audience terminal in the live webcast room comprises:
displaying the standard pitch information, the first human voice pitch information and the pitch score information on the audience terminal.

In a second aspect, there is provided a method for displaying pitch information in a live webcast room, comprising:
determining human voice pitch data based on a human voice of a steamer captured by a streamer terminal in a live webcast room, the human voice pitch data being employed by an audience terminal in the live webcast room to determine first human voice pitch information based on the human voice pitch data;
generating a first packet, the first packet comprising the human voice pitch data; and
sending the first packet to the audience terminal.

Optionally, the method further comprises:
detecting whether the streamer terminal is capturing an audio; and
extracting the human voice of the streamer from the audio when the streamer terminal is capturing the audio.

Optionally, the determining the human voice pitch data based on the human voice of the streamer comprises:
processing the human voice of the streamer by a discrete transform algorithm to obtain second human voice pitch information; and
determining the human voice pitch data based on the second human voice pitch information.

Optionally, the determining the human voice pitch data based on the second human voice pitch information comprises:
sampling the second human voice pitch information to obtain discrete human voice data; and
determining the discrete human voice data as the human voice pitch data.

Optionally, the first packet further comprises information of a song, the song being at least one of a song played on the streamer terminal and a song sung by the streamer.

Optionally, when the audio captured by the streamer terminal is an audio sung by the streamer, the method further comprises:
identifying the audio by the algorithm for listening to and identifying a song, to determine the information of the song that the audio corresponds to.

Optionally, the information of the song comprises at least one of identification information of the song, a standard pitch file of the song, and a download address of the standard pitch file of the song.

Optionally, the sending the first packet to the audience terminal comprises:
synchronously sending the first packet and live streaming data to the audience terminal, the live streaming data comprising multimedia data.

Optionally, the method further comprises:
acquiring standard pitch information of a song based on information of the song, the song being at least one of a song played on the streamer terminal and a song sung by the streamer; and
displaying the second human voice pitch information and the standard pitch information on the streamer terminal.

Optionally, the first packet further comprises pitch score information.

In a third aspect, there is provided an apparatus for displaying pitch information in a live webcast room, comprising:
a determining module, configured to determine first human voice pitch information based on a human voice of a streamer captured by a streamer terminal in a live webcast room;
a first acquiring module, configured to acquire information of a song, the song being at least one of a song played on the streamer terminal and a song sung by the streamer;
a second acquiring module, configured to acquire standard pitch information of the song based on the information of the song; and
a displaying module, configured to display the first human voice pitch information and the standard pitch information on an audience terminal in the live webcast room.

Optionally, the determining module comprises:
a receiving sub-module, configured to receive a first packet from the streamer terminal, the first packet comprising human voice pitch data; and
a determining sub-module, configured to determine the first human voice pitch information based on the human voice pitch data;
wherein the human voice pitch data is determined by the streamer terminal based on the human voice of the streamer.

Optionally, the human voice pitch data is discrete human voice data obtained by sampling second human voice pitch information after the streamer terminal determines the second human voice pitch information based on the human voice of the streamer; and the determining sub-module is configured to:
smoothen the human voice pitch data to obtain the first human voice pitch information.

Optionally, the first packet further comprises the information of the song; and the first acquiring module is configured to:
acquire the information of the song played on the streamer terminal, and/or the information of the song sung by the streamer, based on the first packet.

Optionally, the information of the song comprises identification information of the song; and the second acquiring module is configured to:
acquire a standard pitch file of the song based on the identification information of the song; and
acquire the standard pitch information from the standard pitch file.

Optionally, the information of the song comprises a standard pitch file of the song; and the second acquiring module is configured to:
acquire the standard pitch information from the standard pitch file.

Optionally, the information of the song comprises a download address of a standard pitch file of the song; and the second acquiring module is configured to:
download the standard pitch file of the song based on the download address; and
acquire the standard pitch information from the standard pitch file.

Optionally, the receiving sub-module is configured to:
display prompt information of pitch information on the audience terminal; and
receive the first packet from the streamer terminal after a trigger operation for the prompt information of the pitch information is detected.

Optionally, the receiving sub-module is configured to:
receive the first packet and live streaming data that are synchronously sent by the streamer terminal, the live streaming data comprising multimedia data; and
the displaying module is configured to:
play live streaming content that the live streaming data corresponds to on the audience terminal, and synchronously display the first human voice pitch information and the standard pitch information on the audience terminal.

Optionally, the multimedia data includes audio data of the song, and the first acquiring module is configured to:
identify the audio that the audio data corresponds to by the algorithm for listening to and identifying a song, to determine the information of the song.

Optionally, the first packet further comprises pitch score information; and the displaying module is configured to:
display the standard pitch information, the first human voice pitch information and the pitch score information on the audience terminal.

In a fourth aspect, three is provided an apparatus for displaying pitch information in a live webcast room, comprising:
a determining module, configured to determine human voice pitch data based on a human voice of a steamer captured by a streamer terminal in a live webcast room, the human voice pitch data being employed by an audience terminal in the live webcast room to determine first human voice pitch information based on the human voice pitch data;
a generating module, configured to generate a first packet, the first packet comprising the human voice pitch data; and
a sending module, configured to send the first packet to the audience terminal.

Optionally, the apparatus further comprises:
a detecting module, configured to detect whether the streamer terminal is capturing an audio; and
an extracting module, configured to extract the human voice of the streamer from the audio when the streamer terminal is capturing the audio.

Optionally, the determining module comprises:
a processing sub-module, configured to process the human voice of the streamer by a discrete transform algorithm to obtain second human voice pitch information; and
a determining sub-module, configured to determine the human voice pitch data based on the second human voice pitch information.

Optionally, the determining sub-module is configured to:
sample the second human voice pitch information to obtain discrete human voice data; and
determine the discrete human voice data as the human voice pitch data.

Optionally, the first packet further comprises information of a song, the song being at least one of a song played on the streamer terminal and a song sung by the streamer.

Optionally, the apparatus further comprises:
an identifying module, configured to identify the audio by the algorithm for listening to and identifying a song, to determine the information of the song that the audio corresponds to.

Optionally, the information of the song comprises at least one of identification information of the song, a standard pitch file of the song, and a download address of the standard pitch file of the song.

Optionally, the sending module is configured to:
synchronously send the first packet and live streaming data to the audience terminal, the live streaming data comprising multimedia data.

Optionally, the apparatus further comprises:
an acquiring module, configured to acquire standard pitch information of a song based on information of the song, the song being at least one of a song played on the streamer terminal and a song sung by the streamer; and
a displaying module, configured to display the second human voice pitch information and the standard pitch information on the streamer terminal.

Optionally, the first packet further comprises pitch score information.

In a fifth aspect, there is provided an apparatus for displaying pitch information in a live webcast room, comprising:
a processor; and
a memory for storing instructions executable by the processor;
wherein the processor is configured to:
determine first human voice pitch information based on a human voice of a streamer captured by a streamer terminal in the live webcast room;
acquire information of a song, the song being at least one of a song played on the streamer terminal and a song sung by the streamer;
acquire standard pitch information of the song based on the information of the song; and
display the first human voice pitch information and the standard pitch information on an audience terminal in the live webcast room.

In a sixth aspect, there is provided an apparatus for displaying pitch information in a live webcast room, comprising:
a processor; and
a memory for storing instructions executable by the processor;
wherein the processor is configured to:
determine human voice pitch data based on a human voice of a steamer captured by a streamer terminal in a live webcast room, the human voice pitch data being employed by an audience terminal in the live webcast room to determine first human voice pitch information based on the human voice pitch data;
generate a first packet, the first packet comprising the human voice pitch data; and
send the first packet to the audience terminal.

In a seventh aspect, there is provided a storage medium, comprising instructions; wherein the instructions, when being executed by a processor of an audience terminal, cause the audience terminal to perform the method for displaying pitch information in a live webcast room in the first aspect; or the instructions, when being executed by a processor of a streamer terminal, cause the streamer terminal to perform the method for displaying pitch information in a live webcast room in the second aspect.

The technical solutions according to the embodiments of the present disclosure achieve the following beneficial effects.

With the method and apparatus for displaying pitch information in a live webcast room, and the storage medium according to the embodiments of the present disclosure, after a live streaming client is enabled, the streamer terminal in the live webcast room may determine the human voice pitch data based on the human voice of the streamer, generates the first packet including the human voice pitch data, and then sends the first packet to the audience terminal. The audience terminal may determine the first human voice pitch information based on the human voice pitch data included in the first packet; and after the standard pitch information is acquired, the first human voice pitch information and the standard pitch information are displayed on the audience terminal. In this way, the function of displaying the pitch information on the audience terminal is implemented, display modes of the pitch information are diversified, and display flexibility of the pitch information is improved.

### BRIEF DESCRIPTION OF THE DRAWINGS

FIG. 1 is a schematic structural diagram of an implementation environment of a method for displaying pitch information in a live webcast room according to an embodiment of the present disclosure;
FIG. 2 is a flowchart of a method for displaying pitch information in a live webcast room according to an embodiment of the present disclosure;
FIG. 3 is a flowchart of another method for displaying pitch information in a live webcast room according to an embodiment of the present disclosure;
FIG. 4 is a flowchart of still another method for displaying pitch information in a live webcast room according to an embodiment of the present disclosure;
FIG. 5 is a schematic diagram of an interface of a streamer terminal according to an embodiment of the present disclosure;
FIG. 6 is a schematic diagram of an interface of an audience terminal according to an embodiment of the present disclosure;
FIG. 7 is a schematic diagram of an interface of another audience terminal according to an embodiment of the present disclosure;
FIG. 8 is a schematic diagram of an interface of still another audience terminal according to an embodiment of the present disclosure;
FIG. 9 is a schematic diagram of an interface of yet still another audience terminal according to an embodiment of the present disclosure;
FIG. 10 is a schematic structural diagram of an apparatus for displaying pitch information in a live webcast room according to an embodiment of the present disclosure;
FIG. 11 is a schematic structural diagram of a determining module according to an embodiment of the present disclosure;
FIG. 12 is a schematic structural diagram of an apparatus for displaying pitch information in a live webcast room according to another embodiment of the present disclosure;
FIG. 13 is a schematic structural diagram of another apparatus for displaying pitch information in a live webcast room according to an embodiment of the present disclosure;
FIG. 14 is a schematic structural diagram of a determining module according to another embodiment of the present disclosure;
FIG. 15 is a schematic structural diagram of still another apparatus for displaying pitch information in a live webcast room according to an embodiment of the present disclosure;
FIG. 16 is a schematic structural diagram of yet still another apparatus for displaying pitch information in a live webcast room according to an embodiment of the present disclosure; and

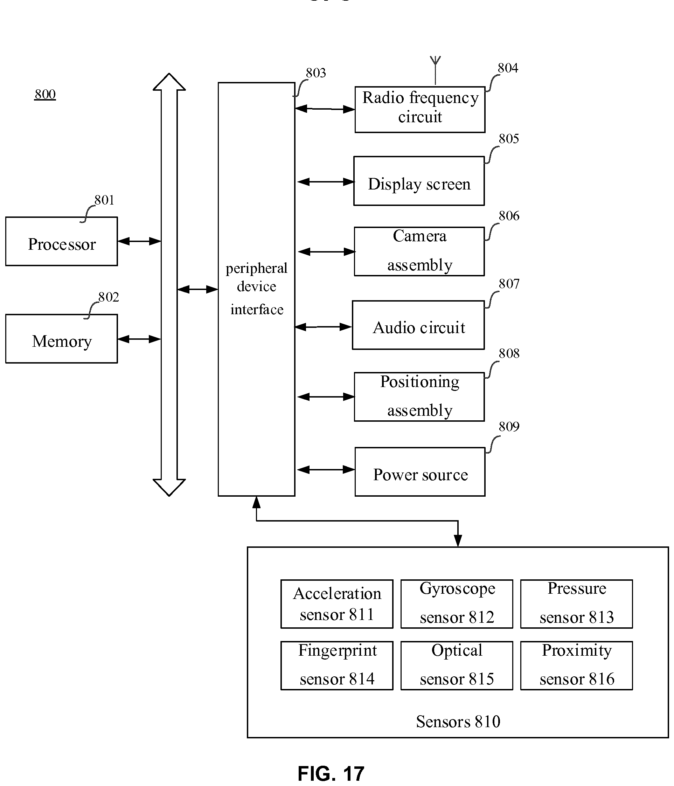

FIG. 17 is a schematic structural diagram of a terminal according to an embodiment of the present disclosure.

### DETAILED DESCRIPTION

For clearer description of the objectives, technical solutions, and advantages of the present disclosure, embodiments of the present disclosure are described hereinafter in detail with reference to the accompanying drawings.

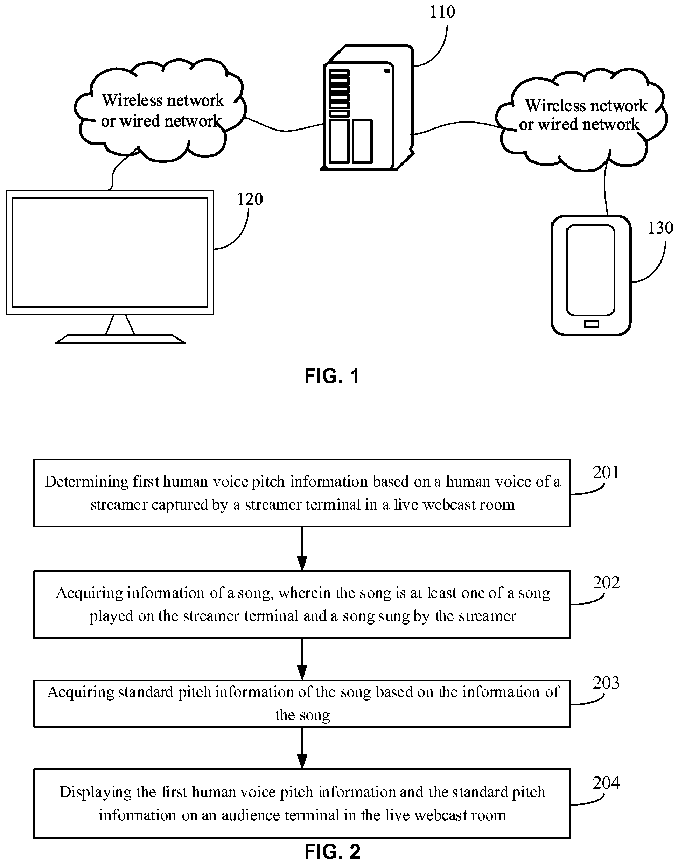

FIG. 1 is a schematic structural diagram of an implementation environment of a method for displaying pitch information in a live webcast room according to an embodiment of the present disclosure. As illustrated in FIG. 1, the implementation environment may include: a live streaming server 110, a streamer terminal 120 and at least one audience terminal 130 in a live webcast room.

In the embodiment of the present disclosure, the streamer terminal in the live webcast room refers to a terminal that is enabled and logs in to a live streaming client via a live streaming account, and the audience terminal in the live webcast room refers to a terminal that visits the live webcast room to display live streaming content.

Optionally, the live streaming server 110 may be a server, or a server cluster formed by a plurality of servers, or a cloud computing service center or the like, which is not limited in the embodiment of the present disclosure. The streamer terminal 120 may be a terminal device including a camera and a speech recorder (for example, a microphone), such as a smart phone, a tablet computer, a desktop computer, a laptop computer and so forth. The audience terminal 130 may be a smart phone, a computer, a television, a multimedia player, an electronic reader or the like. A connection may be established between the live streaming server 110 and the streamer terminal 120 by a wired network or a wireless network, and a connection may be established between the live streaming server 110 and the audience terminal 130 by a wired network or a wireless network. As illustrated in FIG. 1, in the embodiment of the present disclosure, description is given using the scenario where the streamer terminal 120 is a desktop computer and the audience terminal 130 is a smart phone as an example.

It should be noted that a live streaming client is installed on the streamer terminal 130, and the streamer terminal 120 is connected to the live streaming server 110 by the live streaming client. The live streaming server 110 is a server that the live streaming client corresponds to.

FIG. 2 is a flowchart of a method for displaying pitch information in a live webcast room according to an embodiment of the present disclosure. The method may be applied to the audience terminal 130 in the implementation environment as illustrated in FIG. 1. As illustrated in FIG. 2, the method may include the following steps.

In step 201, first human voice pitch information is determined based on a human voice of a streamer captured by a streamer terminal in a live webcast room.

In step 202, information of a song is acquired, wherein the song is at least one of a song played on the streamer terminal and a song sung by the streamer.

In step 203, standard pitch information of the song is acquired based on the information of the song.

In step 204, the first human voice pitch information and the standard pitch information are displayed on an audience terminal in the live webcast room.

In summary, with the method for displaying pitch information in a live webcast room according to the embodiment of the present disclosure, the audience terminal may determine the first human voice pitch information based on the human voice of the streamer captured by the streamer terminal in the live webcast room; and after the information of the song played on the streamer terminal and/or the information of the song sung by the streamer is acquired, the standard pitch information of the song may be acquired based on the information of the song, and finally the first human voice pitch information and the standard pitch information are displayed on the audience terminal. In this way, the function of displaying the pitch information on the audience terminal is implemented, display modes of the pitch information are diversified, and display flexibility of the pitch information is improved.

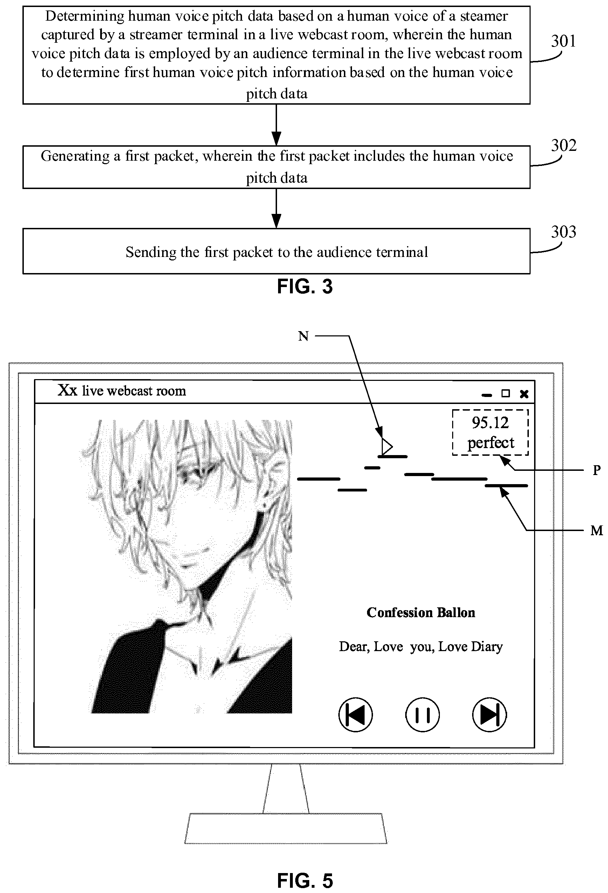

FIG. 3 is a flowchart of another method for displaying pitch information in a live webcast room according to an embodiment of the present disclosure. The method may be applied to the streamer terminal 120 terminal in the implementation environment as illustrated in FIG. 1. As illustrated in FIG. 3, the method may include the following steps.

In step 301, human voice pitch data is determined based on a human voice of a steamer captured by a streamer terminal in a live webcast room, wherein the human voice pitch data is employed by an audience terminal in the live webcast room to determine first human voice pitch information based on the human voice pitch data.

In step 302, a first packet is generated, wherein the first packet includes the human voice pitch data.

In step 303, the first packet is sent to the audience terminal.

Optionally, the streamer terminal sends the first packet to the audience terminal by a live streaming server.

In summary, with the method for displaying pitch information in a live webcast room according to the embodiment of the present disclosure, after a live streaming client is enabled, the streamer terminal may determine the human voice pitch data based on the human voice of the streamer, generates the first packet including the human voice pitch data, and then sends the first packet to the audience terminal; and the audience terminal may determine the first human voice pitch information based on the human voice pitch data included in the first packet; and after the standard pitch information is acquired, the first human voice pitch information and the standard pitch information are displayed on the audience terminal. In this way, the function of displaying the pitch information on the audience terminal is implemented, display modes of the pitch information are diversified, and display flexibility of the pitch information is improved.

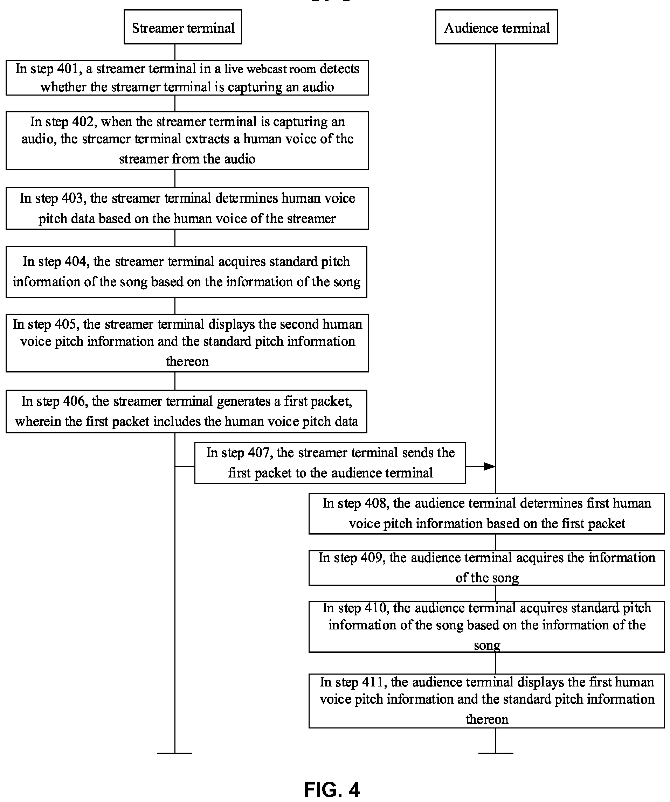

FIG. 4 is a flowchart of still another method for displaying pitch information in a live webcast room according to an embodiment of the present disclosure. The method may be applied to the implementation environment as illustrated in FIG. 1. As illustrated in FIG. 4, the method may include the following steps.

In step 401, a streamer terminal in a live webcast room detects whether the streamer terminal is capturing an audio.

Optionally, after a live streaming client on a terminal is enabled and the terminal logs in to the live streaming client via a live streaming account, the terminal is determined as the streamer terminal in the live webcast room. By detecting whether the current streamer terminal is capturing an audio, whether a current streamer is live streaming by the live streaming client may be judged.

In step 402, when the streamer terminal is capturing an audio, the streamer terminal extracts a human voice of the streamer from the audio.

When the streamer terminal is capturing an audio, it may be determined that the current streamer is live streaming by the live streaming client, and the streamer terminal may extract a human voice of the streamer from the captured audio.

In step 403, the streamer terminal determines human voice pitch data based on the human voice of the streamer.

Optionally, the human voice of the streamer may be processed by a discrete transform algorithm to obtain second human voice pitch information; and the human voice pitch data may be determined based on the second human voice pitch information.

The discrete transform algorithm may be the discrete Fourier transform algorithm, the discrete wavelet transform algorithm or the discrete cosine transform algorithm, which is not limited in the embodiment of the present disclosure.

It should be noted that the second human voice pitch information obtained by processing the human voice of the streamer by the streamer terminal includes human voice pitches at different time points in the audio, wherein each human voice pitch at each time point is represented by a piece of frequency data, that is, the second human voice pitch information may be a group of frequency data. The frequency data is data reflecting a human voice frequency, in the unit of Hz.

Optionally, in the second human voice pitch information acquired by the streamer terminal, 20 to 30 pieces of frequency data may be included in each second.

Optionally, when the streamer terminal is playing a song, the streamer terminal may determine the human voice pitch data based on the second human voice pitch information; and/or when the audio captured by the streamer terminal is an audio sung by the streamer, the streamer terminal may determine the human voice pitch data based on the second human voice pitch information.

The streamer terminal may play a song via a client or webpage. A client for playing a song on the streamer terminal may be the live streaming client, or may be another audio playing client, which is not limited in the embodiment of the present disclosure.

Optionally, the method for determining the human voice pitch data based on the second human voice pitch information by the streamer terminal may include: sampling the second human voice pitch information to obtain discrete human voice data; and determining the discrete human voice data as the human voice pitch data.

Exemplarily, the streamer terminal may sample the second human voice pitch information based on a preset sampling frequency. For example, the preset sampling frequency is 2 to 4, that is, the streamer terminal samples 2 to 4 pieces of frequency data from frequency data in the second human voice pitch information in each second, to obtain the human voice pitch data. Exemplarily, when the preset sampling frequency is 2, the human voice pitch data obtained by sampling the second human voice pitch information by the streamer terminal includes 2 pieces of frequency data in each second.

Optionally, the human voice pitch data obtained by the streamer terminal may also be the second human voice pitch information, which is not limited in the embodiment of the present disclosure.

In step 404, the streamer terminal acquires standard pitch information of the song based on the information of the song.

The song is at least one of a song played on the streamer terminal and a song sung by the streamer.

In one optional embodiment of the present disclosure, when the streamer terminal is playing a song, the streamer terminal may download a standard pitch file of the song being currently played from a server that the webpage or the client for playing the song corresponds to, and parses the standard pitch file to acquire the standard pitch information of the song. For example, when the streamer terminal plays a song by an audio playing client, the streamer terminal may download, via the audio playing client, a standard pitch file of the song being currently played from an audio server, and parses the standard pitch file to acquire the standard pitch information of the song.

In another optional embodiment of the present disclosure, when no song is being played on the streamer terminal, the streamer terminal may identify the acquired audio by an algorithm for listening to and identifying a song, and judge whether the audio is the audio of the song sung by the streamer. When it is determined that the audio is the audio of the song sung by the streamer, information of the song that the audio corresponds to may be acquired. That is, in the embodiment of the present disclosure, when the streamer is singing a song in a cappella mode, the streamer terminal can also acquire information of the song, and acquire standard pitch information of the song based on the information of the song. The information of the song may include the title of the song and the information of the original singer of the song.

In step 405, the streamer terminal displays the second human voice pitch information and the standard pitch information thereon.

Exemplarily, as illustrated in FIG. 5, when the streamer terminal is live streaming by an "xx live streaming" client, the streamer terminal may display standard pitch information M and second human voice pitch information N on a display interface. The standard pitch information M is displayed in the form of a pitch line, and the second human voice pitch information N is displayed in the form of a triangle. When the streamer is singing, the second human voice pitch information N hops up and down around the standard pitch information M based on a match degree between the second human voice pitch information N and the standard pitch information M. A hopping frequency of the second human voice pitch information N is the frequency of the second human voice pitch information acquired by the streamer terminal. For example, within each second, the second human voice pitch information includes 20 pieces of frequency data, and thus the hopping frequency of the second human voice pitch information N is 20 times per second.

Optionally, while the streamer terminal displays the standard pitch information M and the second human voice pitch information N, the streamer terminal may also display pitch score information on the display interface thereof. For example, after a sentence of lyrics is sung, pitch score information may be displayed on the display interface of the streamer terminal, such that displayed content for the pitch information is diversified, and interest of the display is improved. As illustrated in FIG. 5, pitch score information P may include score information and evaluation information. For example, the score information may be "95.12", and the score information may be "perfect". The pitch score information is determined based on the match degree between the standard pitch information and the second human voice pitch information.

In step 406, the streamer terminal generates a first packet, wherein the first packet includes the human voice pitch data.

Optionally, the first packet may further include the information of the song. The information of the song may include at least one of identification information of the song, a standard pitch file of the song, and a download address of the standard pitch file of the song.

Optionally, the first packet may further include the pitch score information.

It should be noted that the second human voice pitch information is sampled to obtain the human voice pitch data. In this way, a data amount of the generated first packet may be reduced, and network transmission cost is lowered.

In step 407, the streamer terminal sends the first packet to the audience terminal.

Optionally, the streamer terminal synchronously sends the first packet and live streaming data to the audience terminal by a live streaming server. The live streaming data includes multimedia data. The multimedia data may include audio data, video data and the like.

In the embodiment of the present disclosure, the streamer terminal may packetize the first packet and the live streaming data to a data packet, and transmit the data packet to the audience terminal in real time.

Optionally, the audience terminal may display prompt information of pitch information, and receive the first packet from the streamer terminal after a trigger operation for the prompt information of pitch information is detected.

In step 408, the audience terminal determines first human voice pitch information based on the first packet.

Optionally, the audience terminal may determine the first human voice pitch information based on the human voice pitch data. The first human voice pitch information may be the human voice pitch data, or the first human voice pitch information may be obtained by processing the human voice pitch data.

Optionally, when the human voice pitch data is obtained by sampling the second human voice pitch information after the streamer terminal determines the second human voice pitch information based on the human voice of the streamer, the method of determining the first human voice pitch information based on the first packet may include: smoothening the human voice pitch data to obtain the first human voice pitch information.

It should be noted that when the human voice pitch data is data obtained by sampling the second human voice pitch information, the data amount of the human voice pitch data is far less than the data amount of the second human voice pitch information. In this way, the operation load of parsing the first packet by the audience terminal may be reduced, such that when the audience terminal watches, on a webpage, the live streaming content on the streamer terminal, the browser may parse the first packet, and thus the function of displaying the first human voice pitch information on the webpage of the audience terminal is implemented.

In step 409, the audience terminal acquires the information of the song.

Optionally, when the first packet includes the information of the song, the audience terminal may acquire, based on the first packet, the information of the song played on the streamer terminal and/or the information of the song sung by the streamer. When the first packet does not include the information of the song, upon receiving the first packet and the live streaming data synchronously sent by the streamer terminal by the live streaming server, the audience terminal may extract audio data of the song from the live streaming data, and identify the audio that the audio data corresponds to by the algorithm for listening to and identifying a song, to determine the information of the song. In the embodiment of the present disclosure, the way of acquiring the information of the song by the audience terminal is not limited.

In step 410, the audience terminal acquires standard pitch information of the song based on the information of the song.

Optionally, the audience terminal may acquire the standard pitch information of the song based on the information of the song in a plurality of ways. In the embodiment of the present disclosure, the following three ways are described exemplarily.

In a first way, when the information of the song includes identification information of the song, the audience terminal may acquire a standard pitch file of the song locally or from or a server based on the identification information of the song. For example, based on the identification information of the song, the audience terminal may firstly search whether the standard pitch file of the song is stored locally. If the standard pitch file of the song is stored locally, the standard pitch file is acquired locally. If the standard pitch file of the song is not stored locally, the standard pitch file of the song is downloaded from the server based on the identification information of the song. Further, the audience terminal parses the standard pitch file to acquire the standard pitch information of the song.

In a second way, when the information of the song includes a standard pitch file of the song, the audience terminal may acquire the standard pitch information from the standard pitch file by: parsing the standard pitch file to acquire the standard pitch information of the song.

In a third way, when the information of the song includes a download address of the standard pitch file of the song, the audience terminal may downlink the standard pitch file of the song based on the download address, and parse the standard pitch file to acquire the standard pitch information of the song.

In step 411, the audience terminal displays the first human voice pitch information and the standard pitch information thereon.

Optionally, after the audience terminal receives the first packet and the live streaming data synchronously sent by the streamer terminal by the live streaming server, the live streaming content that the live streaming data corresponds to may be played on the audience terminal, and the first human voice pitch information and the standard pitch information may be synchronously displayed on the audience terminal. That is, the audience terminal may synchronously play a live streaming video and a live streaming audio, and display the first human voice pitch information and the standard pitch information of the live streaming audio on the display interface, such that the audience acknowledges the actual singing level of the streamer based on the first human voice pitch information, and thus user experience of the audience is improved.

Optionally, the first packet may further include the pitch score information, and the standard pitch information, the first human voice pitch information and the pitch score information may be displayed on the audience terminal. It should be noted that in step 408, by smoothening the human voice pitch data to obtain the first human voice pitch information, continuity of the first human voice pitch information may be improved, such that the first human voice pitch information has a good display continuity during display, and thus the entire display aesthetic degree of the standard pitch information is improved.

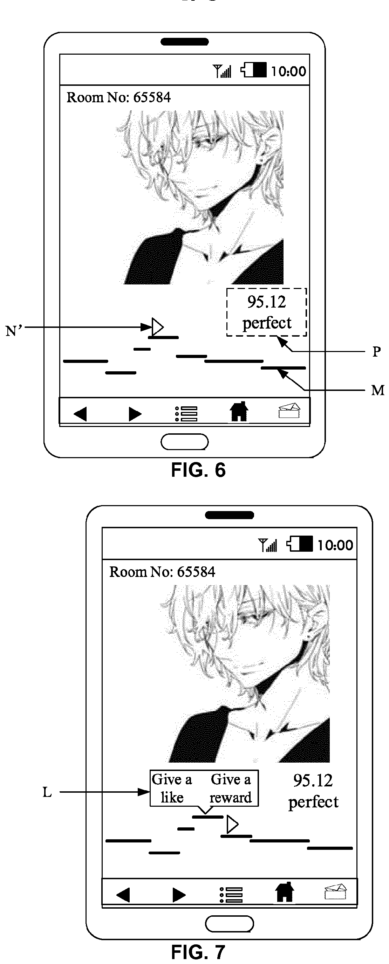

Exemplarily, as illustrated in FIG. 6, the pitch information displayed on the audience terminal may include the standard pitch information M and first human voice pitch information N', wherein the standard pitch information M is displayed in the form a pitch line, and the first human voice pitch information N' is displayed in the form of a triangle. When the streamer is singing, the first human voice pitch information N' hops up and down around the standard pitch information M based on a match degree between the first human voice pitch information N' and the standard pitch information M. A hopping frequency of the first human voice pitch information N' is the frequency of the first human voice pitch information determined by the audience terminal based on the human voice pitch data. At the same time when the audio is played, the first human voice pitch information displayed on the audience terminal is consistent with the second human voice pitch information displayed on the streamer terminal.

Optionally, when the first packet includes the pitch score information, after a sentence of lyrics is sung, pitch score information may be displayed on the display interface of the audience terminal, such that displayed content for the pitch information is diversified, and interest of the display is improved. As illustrated in FIG. 6, pitch score information P may include score information and evaluation information. For example, the score information may be "95.12", and the evaluation information may be "perfect". The pitch score information is determined based on the match degree between the standard pitch information and the second human voice pitch information.

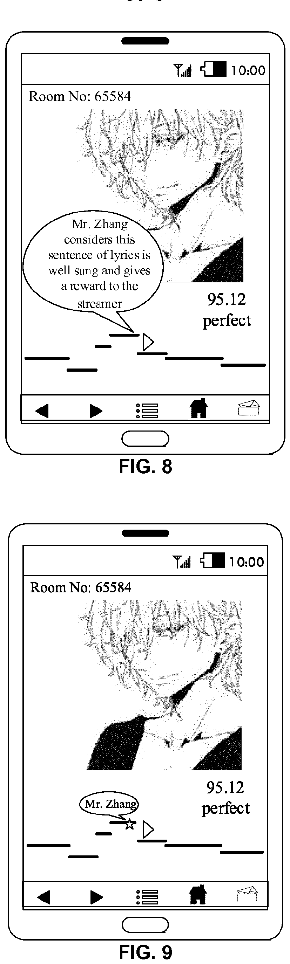

Optionally, the audience may give a like and/or a reward to the performance of the streamer on the audience terminal. For example, when the audience considers that a sentence of lyrics is well sung by the streamer, the audience may perform a trigger operation at the position of this sentence of lyrics in the standard pitch information, wherein the trigger operation may be a long-press operation or a double-click operation or the like. In this case, as illustrated in FIG. 7, the audience terminal may display interaction prompt information L, wherein the interaction prompt information L may include a "give a like" prompt and a "give a reward" prompt. When the audience terminal receives a trigger instruction for a "give a like" prompt, it indicates that the audience gives a gift to the streamer by the audience terminal. If the live streaming server indicates, based on statistical collection, that a count of times that an audience terminal gives a gift reaches a preset time count threshold, as illustrated in FIG. 8, reward information may be displayed on the standard pitch information displayed on the audience terminal, wherein content of the reward information includes "Mr. Zhang considers this sentence of lyrics is well sung and gives a reward to the streamer'"; or as illustrated in FIG. 9, a reward mark may be given on the standard pitch information displayed on the audience terminal, for example, the reward mark may be a pentagram, and information, "Mr. Zhang", of the audience who gives the reward may be displayed around the reward mark. Optionally, the reward information or the reward mark may also be displayed on the streamer terminal, such that the streamer acknowledges in real time the information of the audience who gives the reward. In this way, interest of live streaming may be improved, real-time interactions between the audience and the streamer may be enhanced, and user experience may be improved.

It should be noted that the sequence of the steps in the method for displaying pitch information in a live webcast room according to the embodiment of the present disclosure may be suitably adjusted, for example, step 404 and step 405 may be synchronously performed with step 406 to step 411 and the steps may also be reduced or added according to the actual needs. Variations of method that may be easily derived by a person skilled in the art within the technical scope of the present disclosure shall fall within the protection scope of the present disclosure, which are thus not described herein any further.

In summary, with the method for displaying pitch information in a live webcast room according to the embodiment of the present disclosure, after a live streaming client is enabled, the streamer terminal may determine the human voce pitch data based on the human voice of the streamer, generates the first packet including the human voice pitch data, and then sends the first packet to the audience terminal by the live streaming server; and the audience terminal may determine the first human voice pitch information based on the human voice pitch data included in the first packet; and after the standard pitch information is acquired, the first human voice pitch information and the standard pitch information are displayed on the audience terminal. In this way, the function of displaying the pitch information on the audience terminal is implemented, display modes of the pitch information are diversified, and display flexibility of the pitch information is improved. By displaying the pitch information on the audience terminal, interactions between the audience and the streamer may be enhanced, and user experience may be improved.

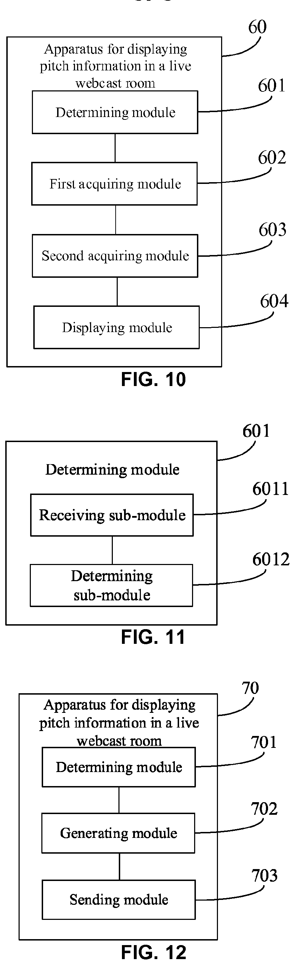

FIG. 10 is a schematic structural diagram of an apparatus 60 for displaying pitch information in a live webcast room according to an embodiment of the present disclosure. As illustrated in FIG. 10, the apparatus 60 may include:
a determining module 601, configured to determine first human voice pitch information based on a human voice of a streamer captured by a streamer terminal in a live webcast room;
a first acquiring module 602, configured to acquire information of a song, the song being at least one of a song played on the streamer terminal and a song sung by the streamer;
a second acquiring module 603, configured to acquire standard pitch information of the song based on the information of the song; and
a displaying module 604, configured to display the first human voice pitch information and the standard pitch information on an audience terminal in the live webcast room.

In summary, with the apparatus for displaying pitch information in a live webcast room according to the embodiment of the present disclosure, the audience terminal may determine, by the determining module, the first human voice pitch information based on the human voice of the streamer captured by the streamer terminal in the live webcast room; and after the information of the song played on the streamer terminal and/or the information of the song sung by the streamer is acquired by the first acquiring module, the standard pitch information of the song may be acquired by the second acquiring module based on the information of the song, and finally the first human voice pitch information and the standard pitch information are displayed by the displaying module on the audience terminal. In this way, the function of displaying the pitch information on the audience terminal is implemented, display modes of the pitch information are diversified, and display flexibility of the pitch information is improved.

Optionally, as illustrated in FIG. 11, the determining module 601 may include:
a receiving sub-module 6011, configured to receive a first packet from the streamer terminal, the first packet including human voice pitch data; and
a determining sub-module 6012, configured to determine the first human voice pitch information based on the human voice pitch data.

The human voice pitch data is determined by the streamer terminal based on the human voice of the streamer, and a live streaming server is a server that a live streaming client corresponds to.

Optionally, the human voice pitch data is discrete human voice data obtained by sampling second human voice pitch information after the streamer terminal determines the second human voice pitch information based on the human voice of the streamer; and the determining sub-module is configured to:
smoothen the human voice pitch data to obtain the first human voice pitch information.

Optionally, the first packet further includes the information of the song; and the acquiring module is configured to:
acquire, based on the first packet, the information of the song played on the streamer terminal and/or the information of the song sung by the streamer.

In a first case, the information of the song includes identification information of the song; and the acquiring module is configured to:
acquire a standard pitch file of the song based on the identification information; and acquire the standard pitch information from the standard pitch file.

In a second case, the information of the song includes a standard pitch file of the song; and the acquiring module is configured to:
acquire the standard pitch information from the standard pitch file.

In a third case, the information of the song includes a download address of a standard pitch file of the song; and the acquiring module is configured to:
download the standard pitch file of the song based on the download address; and acquire the standard pitch information from the standard pitch file.

Optionally, the receiving sub-module may be configured to:
display prompt information of pitch information on the audience terminal; and
receive the first packet from the streamer terminal after a trigger operation for the prompt information of the pitch information is detected.

Optionally, the receiving sub-module may be configured to:
receive the first packet and live streaming data that are synchronously sent by the streamer terminal, the live streaming data comprising multimedia data.

Correspondingly, the displaying module may be configured to:
play live streaming content that the live streaming data corresponds to on the audience terminal, and synchronously display the first human voice pitch information and the standard pitch information on the audience terminal.

Optionally, the multimedia data includes audio data of the song; and the first acquiring module is configured to:
identify an audio that the audio data corresponds to by an algorithm for listening to and identifying a song to determine the information of the song.

Optionally, the first packet further includes pitch score information; and the displaying module is configured to:
display the standard pitch information, the first human voice pitch information and the pitch score information on the audience terminal.

In summary, with the apparatus for displaying pitch information in a live webcast room according to the embodiment of the present disclosure, the audience terminal may determine, by the determining module, the first human voice pitch information based on the human voice of the streamer captured by the streamer terminal in the live webcast room; and after the information of the song played on the streamer terminal and/or the information of the song sung by the streamer is acquired by the first acquiring module, the standard pitch information of the song may be acquired by the second acquiring module based on the information of the song, and finally the first human voice pitch information and the standard pitch information are displayed by the displaying module on the audience terminal. In this way, the function of displaying the pitch information on the audience terminal is implemented, display modes of the pitch information are diversified, and display flexibility of the pitch information is improved.

FIG. 12 is a schematic structural diagram of an apparatus 70 for displaying pitch information in a live webcast room according to an embodiment of the present disclosure. As illustrated in FIG. 12, the apparatus 70 may include:
a determining module 701, configured to determine human voice pitch data based on a human voice of a steamer captured by a streamer terminal in a live webcast room, the human voice pitch data being employed by an audience terminal in the live webcast room to determine first human voice pitch information based on the human voice pitch data;
a generating module 702, configured to generate a first packet, the first packet including the human voice pitch data; and
a sending module 703, configured to send the first packet to the audience terminal, wherein a live streaming server is a server that a live streaming client corresponds to.

In summary, with the apparatus for displaying pitch information in a live webcast room according to the embodiment of the present disclosure, after a live streaming client is enabled, the streamer terminal may determine the human voce pitch data by the determining module based on the human voice of the streamer, generates the first packet including the human voice pitch data by the generating module, and then sends the first packet to the audience terminal by the sending module; and the audience terminal may determine the first human voice pitch information based on the human voice pitch data included in the first packet; and after the standard pitch information is acquired, the first human voice pitch information and the standard pitch information are displayed on the audience terminal. In this way, the function of displaying the pitch information on the audience terminal is implemented, display modes of the pitch information are diversified, and display flexibility of the pitch information is improved.

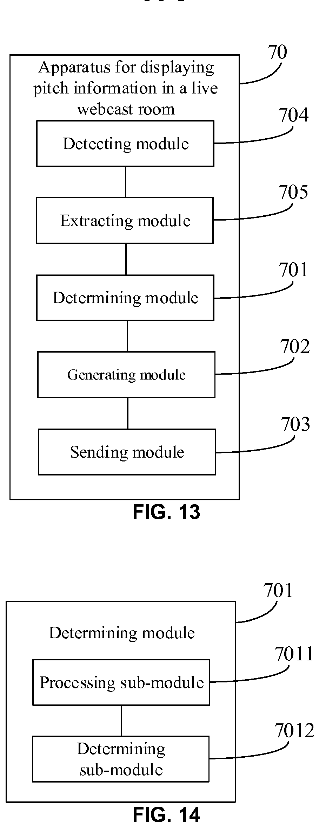

Further, as illustrated in FIG. 13, the apparatus 70 may further include:
a detecting module 704, configured to detect whether the streamer terminal is capturing an audio; and
an extracting module 705, configured to extract the human voice of the streamer from the audio when the streamer terminal is capturing the audio.

Optionally, as illustrated in FIG. 14, the determining module 701 may include:
a processing sub-module 7011, configured to process the human voice of the streamer by a discrete transform algorithm to obtain second human voice pitch information; and
a determining sub-module 7012, configured to determine the human voice pitch data based on the second human voice pitch information.

Optionally, the determining sub-module may be configured to:
sample the second human voice pitch information to obtain discrete human voice data; and determine the discrete human voice data as the human voice pitch data.

Optionally, the first packet further includes information of a song, wherein the song is at least one of a song played on the streamer terminal and a song sung by the streamer.

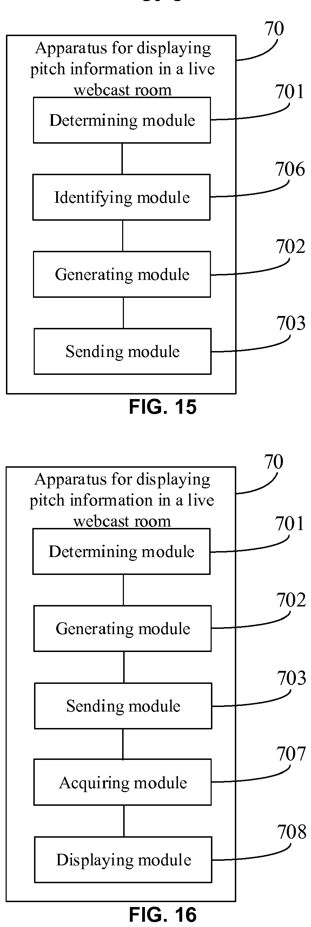

Further, as illustrated in FIG. 15, the apparatus 70 may further include:
an identifying module 706, configured to identify an audio by an algorithm for listening to and identifying a song to determine the information of the song that the audio corresponds to.

Optionally, the information of the song includes at least one of identification information of the song, a standard pitch file of the song, and a download address of the standard pitch file of the song.

Optionally, the sending module may be configured to:
synchronously send the first packet and live streaming data to the audience terminal, the live streaming data including multimedia data.

Further, as illustrated in FIG. 16, the apparatus 70 may further include:
an acquiring module 707, configured to acquire standard pitch information of a song based on information of the song, the song being at least one of a song played on the streamer terminal and a song sung by the streamer; and
a displaying module 708, configured to display the second human voice pitch information and the standard pitch information on the streamer terminal.

Optionally, the first packet further includes the pitch score information.

In summary, with the apparatus for displaying pitch information in a live webcast room according to the embodiment of the present disclosure, after a live streaming client is enabled, the streamer terminal may determine the human voce pitch data by the determining module based on the human voice of the streamer, generates the first packet including the human voice pitch data by the generating module, and then sends the first packet to the audience terminal by the sending module; and the audience terminal may determine the first human voice pitch information based on the human voice pitch data included in the first packet; and after the standard pitch information is acquired, the first human voice pitch information and the standard pitch information are displayed on the audience terminal. In this way, the function of displaying the pitch information on the audience terminal is implemented, display modes of the pitch information are diversified, and display flexibility of the pitch information is improved.

With respect to the apparatus in the above embodiment, details about performing corresponding operations by different modules have been described in the method embodiment, which are not given herein any further.

An embodiment of the present disclosure further provides an apparatus for displaying pitch information in a live webcast room. The apparatus may be an audience terminal, and may include:
a processor; and
a memory for storing instructions executable by the processor;
wherein the processor is configured to:
   determine first human voice pitch information based on a human voice of a streamer captured by a streamer terminal in a live webcast room;
   acquire information of a song, the song being at least one of a song played on the streamer terminal and a song sung by the streamer;
   acquire standard pitch information of the song based on the information of the song; and
   display the first human voice pitch information and the standard pitch information on an audience terminal in the live webcast room.

An embodiment of the present disclosure further provides an apparatus for displaying pitch information in a live webcast room. The apparatus may be a streamer terminal, and may include:
a processor; and
a memory for storing instructions executable by the processor;
wherein the processor is configured to:
   determine human voice pitch data based on a human voice of a steamer captured by a streamer terminal in a live webcast room, the human voice pitch data being employed by an audience terminal in the live webcast room to determine first human voice pitch information based on the human voice pitch data;
   generate a first packet, the first packet comprising the human voice pitch data; and
   send the first packet to the audience terminal, wherein a live streaming server is a server that a live streaming client corresponds to.

Exemplarily, FIG. 8 is a structural block diagram of a terminal 800 according to an exemplary embodiment of the present disclosure. The terminal 800 may be a smart phone, a tablet computer, a Moving Picture Experts Group Audio Layer III (MP3) player, a Moving Picture Experts Group Audio Layer IV (MP4) player, a laptop computer or a desktop computer. The terminal 800 may also be referred to as a user equipment, a portable terminal, a laptop terminal, a desktop terminal or the like.

Optionally, the terminal 800 may be the streamer terminal or the audience terminal in the embodiments of the present disclosure.

Generally, the terminal 800 includes a processor 801 and a memory 802.

The processor 801 may include one or a plurality of processing cores, for example, a four-core processor, an eight-core processor or the like. The processor 801 may be practiced based on a hardware form of at least one of digital signal processing (DSP), field-programmable gate array (FPGA), and programmable logic array (PLA). The processor 801 may further include a primary processor and a secondary processor. The primary processor is a processor configured to process data in an active state, and is also referred to as a central processing unit (CPU); and the secondary processor is a low-power consumption processor configured to process data in a standby state. In some embodiments, the processor 801 may be integrated with a graphics processing unit (GPU), wherein the GPU is configured to render and draw the content to be displayed on the screen. In some embodiments, the processor 801 may further include an artificial intelligence (AI) processor, wherein the AI processor is configured to process calculate operations related to machine learning.

The memory 802 may include one or a plurality of computer-readable storage media, wherein the computer-readable storage medium may be non-transitory. The memory 802 may include a high-speed random access memory, and a non-transitory memory, for example, one or a plurality of magnetic disk storage devices or flash storage devices. In some embodiments, the non-transitory computer-readable storage medium in the memory 802 may be configured to store at least one instruction, wherein the at least one instruction is executed by the processor 801 to perform the method for displaying pitch information in a live webcast room according to the embodiments of the present disclosure.

In some embodiments, the terminal 800 further optionally includes a peripheral device interface 803 and at least one peripheral device. The processor 801, the memory 802 and the peripheral device interface 803 may be connected to each other via a bus or a signal line. The at least one peripheral device may be connected to the peripheral device interface 803 via a bus, a signal line or a circuit board. Specifically, the peripheral device includes at least one of a radio frequency circuit 804, a touch display screen 805, a camera 806, an audio circuit 807, a positioning assembly 808 and a power source 809.

The peripheral device interface 803 may be configured to connect the at least one peripheral device related to input/output (I/O) to the processor 801 and the memory 802. In some embodiments, the processor 801, the memory 802 and the peripheral device interface 803 are integrated on the same chip or circuit board. In some other embodiments, any one or two of the processor 801, the memory 802 and the peripheral device interface 803 may be practiced on a separate chip or circuit board, which is not limited in this embodiment.

The radio frequency circuit 804 is configured to receive and transmit a radio frequency (RF) signal, which is also referred to as an electromagnetic signal. The radio frequency circuit 804 communicates with a communication network or another communication device via the electromagnetic signal. The radio frequency circuit 804 converts an electrical signal to an electromagnetic signal and sends the signal, or converts a received electromagnetic signal to an electrical signal. Optionally, the radio frequency circuit 804 includes an antenna system, an RF transceiver, one or a plurality of amplifiers, a tuner, an oscillator, a digital signal processor, a codec chip set, a subscriber identification module card or the like. The radio frequency circuit 804 may communicate with another terminal based on at least one wireless communication protocol. The wireless communication protocol includes, but is not limited to: a metropolitan area network, generations of mobile communication networks (including 2G, 3G, 4G and 5G), a wireless local area network and/or a wireless fidelity (WiFi) network. In some embodiments, the radio frequency circuit 804 may further include a near field communication (NFC)-related circuit, which is not limited in the present disclosure.

The display screen 805is configured to display a user interface (UI). The UI may include graphics, texts, icons, videos and any combination thereof. When the display screen 805 is a touch display screen, the display screen 805 further has the capability of acquiring a touch signal on a surface of the display screen 805 or above the surface of the display screen 805. The touch signal may be input to the processor 801 as a control signal, and further processed therein. In this case, the display screen 805 may be further configured to provide a virtual button and/or a virtual keyboard, which are also referred to as a soft button and/or a soft keyboard. In some embodiments, one display screen 805 may be provided, which is arranged on a front panel of the terminal 800. In some other embodiments, at least two display screens 805 are provided, which are respectively arranged on different surfaces of the terminal 800 or designed in a folded fashion. In still some other embodiments, the display screen 805 may be a flexible display screen, which is arranged on a bent surface or a folded surface of the terminal 800. Even, the display screen 805 may be further arranged to an irregular pattern which is non-rectangular, that is, a specially-shaped screen. The display screen 805 may be fabricated from such materials as a liquid crystal display (LCD), an organic light-emitting diode (OLED) and the like.

The camera assembly 806 is configured to capture an image or a video. Optionally, the camera assembly 806 includes a front camera and a rear camera. Generally, the front camera is arranged on a front panel of the terminal, and the rear camera is arranged on a rear panel of the terminal. In some embodiments, at least two rear cameras are arranged, which are respectively any one of a primary camera, a depth of field (DOF) camera, a wide-angle camera and a long-focus camera, such that the primary camera and the DOF camera are fused to implement the background virtualization function, and the primary camera and the wide-angle camera are fused to implement the panorama photographing and virtual reality (VR) photographing functions or other fused photographing functions. In some embodiments, the camera assembly 806 may further include a flash. The flash may be a single-color temperature flash or a double-color temperature flash. The double-color temperature flash refers to a combination of a warm-light flash and a cold-light flash, which may be used for light compensation under different color temperatures.

The audio circuit 807 may include a microphone and a speaker. The microphone is configured to capture an acoustic wave of a user and an environment, and convert the acoustic wave to an electrical signal and output the electrical signal to the processor 801 for further processing, or output the electrical signal to the radio frequency circuit 804 to implement voice communication. For the purpose of stereo capture or noise reduction, a plurality of microphones may be provided, which are respectively arranged at different positions of the terminal 800. The microphone may also be an array microphone or an omnidirectional capturing microphone. The speaker is configured to convert an electrical signal from the processor 801 or the radio frequency circuit 804 to an acoustic wave. The speaker may be a traditional thin-film speaker, or may be a piezoelectric ceramic speaker. When the speaker is a piezoelectric ceramic speaker, it can not only convert an electrical signal to an acoustic wave audible by human beings, but also can convert an electrical signal to an acoustic wave inaudible by human beings for the purpose of ranging or the like. In some embodiments, the audio circuit 807 may further include a headphone plug.

The positioning assembly 808 is configured to determine a current geographical position of the terminal 800 to implement navigation or a local based service (LBS). The positioning assembly 808 may be based on the global positioning system (GPS) from the United States, the Beidou positioning system from China, the Grenas satellite positioning system from Russia or the Galileo satellite navigation system from the European Union.

The power source 809 is configured to supply power for various components in the terminal 800. The power source 809 may be an alternating current, a direct current, a disposable battery or a rechargeable battery. When the power source 809 includes a rechargeable battery, the rechargeable battery may support wired charging or wireless charging. The rechargeable battery may also support the quick-charging technology.

In some embodiments, the terminal may further include one or a plurality of sensors 810. The one or plurality of sensors 810 include, but are not limited to: an acceleration sensor 811, a gyroscope sensor 812, a pressure sensor 813, a fingerprint sensor 814, an optical sensor 815 and a proximity sensor 816.

The acceleration sensor 811 may detect accelerations on three coordinate axes in a coordinate system established for the terminal 800. For example, the acceleration sensor 811 may be configured to detect components of a gravity acceleration on the three coordinate axes. The processor 801 may control the touch display screen 805 to display the user interface in a horizontal view or a longitudinal view based on a gravity acceleration signal acquired by the acceleration sensor 811. The acceleration sensor 811 may be further configured to acquire motion data of a game or a user.

The gyroscope sensor 812 may detect a direction and a rotation angle of the terminal 800, and the gyroscope sensor 812 may collaborate with the acceleration sensor 811 to capture a 3D action performed by the user for the terminal 800. Based on the data acquired by the gyroscope sensor 812, the processor 801 may implement the following functions: action sensing (for example, modifying the UI based on an inclination operation of the user), image stabilization during the photographing, game control and inertial navigation.

The pressure sensor 813 may be arranged on a side frame of the terminal and/or on a lower layer of the touch display screen 805. When the pressure sensor 813 is arranged on the side frame of the terminal 800, it can detect a grip signal of the user against the terminal 800, and the processor 801 implements left or right hand identification or perform a shortcut operation based on the grip signal acquired by the pressure sensor 813. When the force sensor 813 is arranged on the lower layer of the touch display screen 805, the processor 801 implement control of an operable control on the UI based on a pressure operation of the user against the touch display screen 805. The operable control includes at least one of a button control, a scroll bar control, an icon control, and a menu control.

The fingerprint sensor 814 is configured to acquire fingerprints of the user, and the processor 801 determines the identity of the user based on the fingerprints acquired by the fingerprint sensor 814, or the fingerprint sensor 814 determines the identity of the user based on the acquired fingerprints. When it is determined that the identity of the user is trustable, the processor 801 authorizes the user to perform related sensitive operations, wherein the sensitive operations include unlocking the screen, checking encrypted information, downloading software, paying and modifying settings and the like. The fingerprint sensor 814 may be arranged on a front face, a back face or a side face of the terminal 800. When the terminal 800 is provided with a physical key or a manufacturer's logo, the fingerprint sensor 814 may be integrated with the physical key or the manufacturer's logo.

The optical sensor 815 is configured to acquire the intensity of ambient light. In one embodiment, the processor 801 may control the display luminance of the touch display screen 805 based on the intensity of ambient light acquired by the optical sensor 815. Specifically, when the intensity of ambient light is high, the display luminance of the touch display screen 805 is up-shifted; and when the intensity of ambient light is low, the display luminance of the touch display screen 805 is down-shifted. In another embodiment, the processor 801 may further dynamically adjust photographing parameters of the camera assembly 806 based on the intensity of ambient light acquired by the optical sensor 815.

The proximity sensor 816, which is also referred to as a distance sensor, is generally arranged on the front panel of the terminal 800. The proximity sensor 816 is configured to acquire a distance between the user and the front face of the terminal 800. In one embodiment, when the proximity sensor 816 detects that the distance between the user and the front face of the terminal 800 gradually decreases, the processor 801 controls the touch display screen 805 to switch from an active state to a rest state; and when the proximity sensor 816 detects that the distance between the user and the front face of the terminal 800 gradually increases, the processor 801 controls the touch display screen 805 to switch from the rest state to the active state.

A person skilled in the art may understand that the structure of the terminal as illustrated in FIG. 8 does not construe a limitation on the terminal 800. The terminal may include more or less components than those illustrated in FIG. 8, or combinations of some components, or employ different component deployments.

An embodiment of the present disclosure further provides a storage medium storing instructions. The instructions, when being executed by a processor of an audience terminal, cause the audience terminal to perform the method for displaying pitch information in a live webcast room as illustrated in FIG. 2 or FIG. 4; or the instructions, when being executed by a processor of a streamer terminal, cause the streamer terminal to perform the method for displaying pitch information in a live webcast room as illustrated in FIG. 3 or FIG. 4.

Persons of ordinary skill in the art may understand that all or part of the steps described in the above embodiments may be completed through hardware, or through relevant hardware instructed by applications stored in a non-transitory computer readable storage medium, such as a read-only memory, a disk or a CD, or the like.

Detailed above are merely exemplary embodiments of the present disclosure, and are not intended to limit the present disclosure. Within the spirit and principles of the disclosure, any modifications, equivalent substitutions, improvements or the like, are within the protection scope of the present disclosure.

## Claims

1. A method for displaying pitch information in a live webcast room, comprising:
determining first human voice pitch information based on a human voice of a streamer captured by a streamer terminal in a live webcast room;
acquiring information of a song, the song being at least one of a song played on the streamer terminal and a song sung by the streamer;
acquiring standard pitch information of the song based on the information of the song; and
displaying the first human voice pitch information and the standard pitch information on an audience terminal in the live webcast room.

2. The method according to claim 1, wherein the determining first voice pitch information based on a voice of a streamer captured by a streamer terminal in a live webcast room comprises:
receiving a first packet from the streamer terminal, the first packet comprising human voice pitch data; and
determining the first human voice pitch information based on the human voice pitch data;
wherein the human voice pitch data is determined by the streamer terminal based on the human voice of the streamer.

3. The method according to claim 2, wherein the human voice pitch data is discrete human voice data obtained by sampling second human voice pitch information after the streamer terminal determines the second human voice pitch information based on the human voice of the streamer; and the determining the first human voice pitch information based on the human voice pitch data comprises:
smoothening the human voice pitch data to obtain the first human voice pitch information.

4. The method according to claim 2, wherein the first packet further comprises the information of the song; and the acquiring information of a song comprises:
acquiring the information of the song based on the first packet.

5. The method according to claim 4, wherein the information of the song comprises identification information of the song; and the acquiring standard pitch information of the song based on the information of the song comprises:
acquiring a standard pitch file of the song based on the identification information of the song; and
acquiring the standard pitch information from the standard pitch file.

6. The method according to claim 4, wherein the information of the song comprises a standard pitch file of the song; and the acquiring standard pitch information of the song based on the information of the song comprises:
acquiring the standard pitch information from the standard pitch file.

7. The method according to claim 4, wherein the information of the song comprises a download address of a standard pitch file of the song; and the acquiring standard pitch information of the song based on the information of the song comprises:
downloading the standard pitch file of the song based on the download address; and
acquiring the standard pitch information from the standard pitch file.

8. The method according to claim 2, wherein the receiving a first packet from the streamer terminal comprises:
displaying prompt information of pitch information on the audience terminal; and
receiving the first packet from the streamer terminal after a trigger operation for the prompt information of the pitch information is detected.

9. The method according to claim 2, wherein the receiving a first packet from the streamer terminal comprises:
receiving the first packet and live streaming data that are synchronously sent by the streamer terminal, the live streaming data comprising multimedia data; and
the displaying the first human voice pitch information and the standard pitch information on an audience terminal in the live webcast room comprises:
playing live streaming content that the live streaming data corresponds to on the audience terminal, and synchronously displaying the first human voice pitch information and the standard pitch information on the audience terminal.

10. The method according to claim 2, wherein the first packet further comprises pitch score information; and the displaying the first human voice pitch information and the standard pitch information on an audience terminal in the live webcast room comprises:
displaying the standard pitch information, the first human voice pitch information and the pitch score information on the audience terminal.

11. A method for displaying pitch information in a live webcast room, comprising:
determining human voice pitch data based on a human voice of a steamer captured by a streamer terminal in a live webcast room, the human voice pitch data being employed by an audience terminal in the live webcast room to determine first human voice pitch information based on the human voice pitch data;
generating a first packet, the first packet comprising the human voice pitch data; and
sending the first packet to the audience terminal.

12. The method according to claim 11, further comprising:
detecting whether the streamer terminal is capturing an audio; and
extracting the human voice of the streamer from the audio when the streamer terminal is capturing the audio.

13. The method according to claim 11 or 12, wherein the determining the human voice pitch data based on the human voice of the streamer comprises:
processing the human voice of the streamer by a discrete transform algorithm to obtain second human voice pitch information; and
determining the human voice pitch data based on the second human voice pitch information.

14. The method according to claim 13, wherein the determining the human voice pitch data based on the second human voice pitch information comprises:
sampling the second human voice pitch information to obtain discrete human voice data; and
determining the discrete human voice data as the human voice pitch data.

15. The method according to claim 11, wherein the first packet further comprises information of a song, the song being at least one of a song played on the streamer terminal and a song sung by the streamer.

16. The method according to claim 15, wherein
the information of the song comprises at least one of identification information of the song, a standard pitch file of the song, and a download address of the standard pitch file of the song.

17. The method according to claim 11, wherein the sending the first packet to the audience terminal comprises:
synchronously sending the first packet and live streaming data to the audience terminal, the live streaming data comprising multimedia data.

18. The method according to claim 13, further comprising:
acquiring standard pitch information of a song based on information of the song, the song being at least one of a song played on the streamer terminal and a song sung by the streamer; and
displaying the second human voice pitch information and the standard pitch information on the streamer terminal.

19. The method according to claim 11, wherein the first packet further comprises pitch score information.

20. An apparatus for displaying pitch information in a live webcast room, comprising:
a determining module, configured to determine first human voice pitch information based on a human voice of a streamer captured by a streamer terminal in a live webcast room;
a first acquiring module, configured to acquire information of a song, the song being at least one of a song played on the streamer terminal and a song sung by the streamer;
a second acquiring module, configured to acquire standard pitch information of the song based on the information of the song; and
a displaying module, configured to display the first human voice pitch information and the standard pitch information on an audience terminal in the live webcast room.

21. The apparatus according to claim 20, wherein the determining module comprises:
a receiving sub-module, configured to receive a first packet from the streamer terminal, the first packet comprising human voice pitch data; and
a determining sub-module, configured to determine the first human voice pitch information based on the human voice pitch data;
wherein the human voice pitch data is determined by the streamer terminal based on the human voice of the streamer.

22. The apparatus according to claim 21, wherein the human voice pitch data is discrete human voice data obtained by sampling second human voice pitch information after the streamer terminal determines the second human voice pitch information based on the human voice of the streamer; and the determining sub-module is configured to:
smoothen the human voice pitch data to obtain the first human voice pitch information.

23. The apparatus according to claim 21, wherein the first packet further comprises the information of the song; and the first acquiring module is configured to: acquire the information of the song based on the first packet.

24. The apparatus according to claim 23, wherein the information of the song comprises identification information of the song; and the second acquiring module is configured to:
acquire a standard pitch file of the song based on the identification information of the song; and
acquire the standard pitch information from the standard pitch file.

25. The apparatus according to claim 23, wherein the information of the song comprises a standard pitch file of the song; and the second acquiring module is configured to:
acquire the standard pitch information from the standard pitch file.

26. The apparatus according to claim 23, wherein the information of the song comprises a download address of a standard pitch file of the song; and the second acquiring module is configured to:
download the standard pitch file of the song based on the download address; and
acquire the standard pitch information from the standard pitch file.

27. The apparatus according to claim 21, wherein the receiving sub-module is configured to:
display prompt information of pitch information on the audience terminal; and
receive the first packet from the streamer terminal after a trigger operation for the prompt information of the pitch information is detected.

28. The apparatus according to claim 21, wherein the receiving sub-module is configured to:
receive the first packet and live streaming data that are synchronously sent by the streamer terminal, the live streaming data comprising multimedia data; and
the displaying module is configured to:
play live streaming content that the live streaming data corresponds to on the audience terminal, and synchronously display the first human voice pitch information and the standard pitch information on the audience terminal.

29. The apparatus according to claim 21, wherein the first packet further comprises pitch score information; and the displaying module is configured to:
display the standard pitch information, the first human voice pitch information and the pitch score information on the audience terminal.

30. An apparatus for displaying pitch information in a live webcast room, comprising:
a determining module, configured to determine human voice pitch data based on a human voice of a steamer captured by a streamer terminal in a live webcast room, the human voice pitch data being employed by an audience terminal in the live webcast room to determine first human voice pitch information based on the human voice pitch data;
a generating module, configured to generate a first packet, the first packet comprising the human voice pitch data; and
a sending module, configured to send the first packet to the audience terminal.

31. The apparatus according to claim 30, further comprising:
a detecting module, configured to detect whether the streamer terminal is capturing an audio; and
an extracting module, configured to extract the human voice of the streamer from the audio when the streamer terminal is capturing the audio.

32. The apparatus according to claim 30 or 31, wherein the determining module comprises:
a processing sub-module, configured to process the human voice of the streamer by a discrete transform algorithm to obtain second human voice pitch information; and
a determining sub-module, configured to determine the human voice pitch data based on the second human voice pitch information.

33. The apparatus according to claim 32, wherein the determining sub-module is configured to:
sample the second human voice pitch information to obtain discrete human voice data; and
determine the discrete human voice data as the human voice pitch data.

34. The apparatus according to claim 30, wherein the first packet further comprises information of a song, the song being at least one of a song played on the streamer terminal and a song sung by the streamer.

35. The apparatus according to claim 34, wherein
the information of the song comprises at least one of identification information of the song, a standard pitch file of the song, and a download address of the standard pitch file of the song.

36. The apparatus according to claim 30, wherein the sending module is configured to:
synchronously send the first packet and live streaming data to the audience terminal, the live streaming data comprising multimedia data.

37. The apparatus according to claim 32, further comprising:
an acquiring module, configured to acquire standard pitch information of a song based on information of the song, the song being at least one of a song played on the streamer terminal and a song sung by the streamer; and
a displaying module, configured to display the second human voice pitch information and the standard pitch information on the streamer terminal.

38. The apparatus according to claim 30, wherein the first packet further comprises pitch score information.

39. An apparatus for displaying pitch information in a live webcast room, comprising:
a processor; and
a memory for storing instructions executable by the processor;
wherein the processor is configured to:
determine first human voice pitch information based on a human voice of a streamer captured by a streamer terminal in the live webcast room;
acquire information of a song, the song being at least one of a song played on the streamer terminal and a song sung by the streamer;
acquire standard pitch information of the song based on the information of the song; and
display the first human voice pitch information and the standard pitch information on an audience terminal in the live webcast room.

40. An apparatus for displaying pitch information in a live webcast room, comprising:
a processor; and
a memory for storing instructions executable by the processor;
wherein the processor is configured to:
determine human voice pitch data based on a human voice of a steamer captured by a streamer terminal in a live webcast room, the human voice pitch data being employed by an audience terminal in the live webcast room to determine first human voice pitch information based on the human voice pitch data;
generate a first packet, the first packet comprising the human voice pitch data; and
send the first packet to the audience terminal.

41. A storage medium, comprising instructions; wherein the instructions, when being executed by a processor of an audience terminal, cause the audience terminal to perform the method for displaying pitch information in a live webcast room as defined in any one of claims 1 to 10; or the instructions, when being executed by a processor of a streamer terminal, cause the streamer terminal to perform the method for displaying pitch information in a live webcast room as defined in any one of claims 11 to 19.
